# EUROPEAN PATENT APPLICATION

(11) **EP 4 197 634 A1**
(43) Date of publication of application: **21.06.2023**
(21) Application number: 21215706.9
(22) Date of filing: 17.12.2021
(51) Int. Cl.: B01J 31/16, B01J 31/22, B01J 31/24

(54) **METHOD FOR CONVERTING UNSATURATED LIGHT HYDROCARBONS TO UNSATURATED HEAVY HYDROCARBONS, METAL ORGANIC FRAMEWORK COMPOSITION TO BE USED AS CATALYST, AND METHOD OR PREPARING A METAL ORGANIC FRAMEWORK**

(71) Applicant: Metafuels AG, 8135 Langnau am Albis (CH); Paul Scherrer Institut, 5232 Villigen (CH)
(72) Inventor: PEIXOTO ESTEVES, Fabio André, 8053 Zürich (CH); KOSS, Ulrich, 61348 Bad Homburg (DE); HACKETT, Leigh, 8135 Langnau am Albis (CH); KAPOOR, Saurabh, 5405 Dättwil (CH); RANOCCHIARI, Marco, 4310 Rheinfelden (CH); VAN BOKHOVEN, Jeroen, 8044 Zürich (CH)
(74) Representative: Patentanwälte Bauer Vorberg Kayser

(57) **Abstract**

The present invention relates to a method for converting a first hydrocarbon composition to a second hydrocarbon composition. Furthermore, the invention relates to a metal organic framework (MOF) composition configured to be used as MOF catalyst in a method for converting a first hydrocarbon composition to a second hydrocarbon composition. Finally, the invention relates to a method of preparing said MOF composition.

## Description

The present invention relates to a method for converting a first hydrocarbon composition to a second hydrocarbon composition. Furthermore, the invention relates to a metal organic framework (MOF) composition configured to be used as MOF catalyst in a method for converting a first hydrocarbon composition to a second hydrocarbon composition. Finally, the invention relates to a method of preparing said MOF composition.

The industries in the transportation sector are faced with increasing requirements to deploy sustainable fuels. With respect to the aviation industry, these are called sustainable aviation fuels (SAF). In order to meet the respective targets, new solutions are needed.

One of the fundamental approaches to improve sustainability and to achieve SAFs, is the conversion route from an alcohol or an ether to a transport fuel. An example for such an approach is the conversion of methanol to jet fuel. The paper "Methanol to High-Octane Gasoline within a Market-Responsive Biorefinery Concept Enabled by Catalysis" by Ruddy et al. describes the production of gasoline and jet fuel from methanol as an intermediate, which methanol is synthesized from synthesis gas which in turn is obtained from biomass. However, the catalysts used for such processes result in a relatively low hydrocarbon yield in the C₉-C₁₈ range, which is of particular interest for transport fuels and in particular for jet fuel. While converting methanol to olefins (e. g. ethylene, propylene) is well known from prior art (MTO process), processes and catalysts for the conversion of methanol to longer hydrocarbons have been limited to the production of gasoline. Conventional zeolite-based catalysts have proven to be ineffective for the synthesis of jet fuel comprising hydrocarbons predominantly in the C₉-C₁₈ range. Also these catalysts are accompanied with constraints in the pore structures, small pore sizes and diffusion restrictions for molecules entering the catalyst's porous network.

Catalyst-mediated oligomerization of unsaturated hydrocarbons to yield unsaturated hydrocarbons with enhanced carbon count (number of carbon atoms within a hydrocarbon molecule) is known from prior art. For instance, US 10,493,441 describes a method for forming butene from ethylene using a metal organic framework (MOF) catalyst. Employing such MOF catalysts to form hydrocarbons with a carbon count in the jet fuel regime (C₉-C₁₈) have not yet been reported or established with satisfying results.

The object of the present invention is therefore to provide an improved method of converting a first hydrocarbon-composition to a second hydrocarbon-composition, yielding hydrocarbons comprising 9 - 18 carbon atoms, preferably 10 - 16 carbon atoms.

Said object is solved by a method according to claim 1.

A further object of the present invention is to provide a metal organic framework (MOF) composition being suitable to catalyse reactions associated with converting a first hydrocarbon-composition to a second hydrocarbon-composition, yielding hydrocarbons comprising 9 - 18 carbon atoms, preferably 10 - 16 carbon atoms.

Said object is solved by a MOF composition according to claim 3.

Furthermore, it is an object of the present invention to provide an improved method of preparing a MOF composition that is configured to be used as MOF catalyst in a method of converting a first hydrocarbon-composition to a second hydrocarbon-composition according to the invention.

Said object is solved by a method of preparing a MOF composition according to claim 13.

According to the present invention, a method for converting a first hydrocarbon-composition to a second hydrocarbon composition is provided, the method comprising contacting the first hydrocarbon composition with a solid catalyst yielding the second hydrocarbon-composition,
- wherein the first hydrocarbon composition comprises one or more unsaturated hydrocarbon(s), each independently having a number C_{E} of carbon atoms, wherein E = 2 - 8;
- wherein the second hydrocarbon composition comprises one or more unsaturated hydrocarbon(s), each independently having a number C_{P} of carbon atoms, wherein P = 9 - 18, preferably P = 10 - 16;
- and wherein the solid catalyst is a metal organic framework (MOF) catalyst.

In the context of the present invention the terms "comprise" or "comprising" refer to a meaning that a given subject-matter comprises a given feature (e.g. feature A). However, the terms "comprise" or "comprising" do not express that the given subject-matter solely consists of the given feature (e.g. feature A). Much more, the terms "comprise" or "comprising" are associated with a meaning that the given subject-matter may - in addition to the given feature (e.g. feature A) - comprise further features (e.g. features B and C).

According to the above, a hydrocarbon "composition" may comprise one or more hydrocarbons, so in other words a hydrocarbon "composition" may comprise a mixture of several hydrocarbons, the hydrocarbons varying in their number of carbon atoms per molecule (carbon count) or in their chemical structure (e.g. regioisomers, stereoisomers). The hydrocarbon compositions (the first and/or second hydrocarbon composition) may - besides hydrocarbons - comprise other agents as well, e.g. impurities. Also, the hydrocarbon compositions (the first and/or second hydrocarbon composition) may - in addition to the one or more unsaturated hydrocarbons - comprise one or more saturated hydrocarbons (e.g. alkanes). The hydrocarbon compositions (the first and/or second hydrocarbon composition) may comprise branched or unbranched saturated/unsaturated hydrocarbons. The hydrocarbon compositions (the first and/or second hydrocarbon composition) may also comprise cyclic saturated/unsaturated hydrocarbons.

The hydrocarbon compositions, so the first and/or second hydrocarbon composition, may each independently be present in a gaseous or liquid state. Both the gaseous and liquid state enable movement (flow) of the molecules comprised in the hydrocarbon compositions. The hydrocarbon compositions may be dissolved in solvents or carrier media.

"Contacting" the first hydrocarbon composition with a solid catalyst may be understood in a way, that either hydrocarbons are brought into contact (flow) with a stationary catalyst or that both the first hydrocarbon composition (so the hydrocarbon molecules of the first hydrocarbon composition) and the catalyst move with respect to each other. The "contacting" is carried-out in a suitable reactor.

As mentioned above, the first hydrocarbon composition comprises one or more unsaturated hydrocarbon(s), each independently having a number C_{E} of carbon atoms, wherein E = 2 - 8. The hydrocarbon(s) comprised by the first hydrocarbon composition each independently comprise 2 - 8 carbon atoms. For instance (but not exclusively) the first hydrocarbon composition may comprise ethylene, propene, 1-butene (butylene), cis-2-butene, trans-2-butene, isobutylene, trans-buta-1,3-diene, cis-buta-1,3-diene, 1-pentene, 2-pentene, 2-methyl-1-butene, 2-methyl-2-butene, 3-methyl-1-butene etc.

An "unsaturated" hydrocarbon refers to a hydrocarbon having one or more double/triple bonds between adjacent carbon atoms. A "saturated" hydrocarbon refers to a hydrocarbon having only single bonds between adjacent carbon atoms. In particular, the first hydrocarbon composition comprises hydrocarbons each independently having 2 - 8 carbon atoms and each having one or more double and/or triple bonds. The hydrocarbons may be linear, branched or may be cyclic hydrocarbons.

As mentioned above, the second hydrocarbon composition comprises one or more unsaturated hydrocarbon(s), each independently having a number C_{P} of carbon atoms, wherein P = 9 - 18, preferably P = 10 - 16. The hydrocarbon(s) comprised by the second hydrocarbon composition each independently comprise 9 - 18, preferably 10 - 16 carbon atoms. Apparently the unsaturated one or more hydrocarbon(s) of the second hydrocarbon composition (so the hydrocarbon composition after conversion) comprises one or more hydrocarbon(s) with a higher carbon count (number of carbon atoms per molecule). In other words, employing the method according to the invention is suitable to convert molecules (hydrocarbons) of a lower carbon count to molecules of a higher carbon count. Such an enhancement of the carbon count (number of carbon atoms per molecule) may occur via oligomerization. Besides hydrocarbons having 9 - 18, preferably 10 - 16 carbon atoms, the second hydrocarbon composition may also comprise hydrocarbons with a lower or higher number of carbon atoms. The solid catalyst activates and/or catalyses the conversion/oligomerization. In the present case, the solid catalyst is employed in process of heterogeneous catalysis, which means that the catalyst phase differs from the reactant or product phase. This process can be distinguished from homogeneous catalysis where reactants, products and catalyst are present in the same phase (e. g. a liquid phase). Typical phases may be solid, liquid, gaseous, but also immiscible mixtures (such as oil and water) may be form different "phases". In context of the present invention, the term "heterogeneous catalysis" refers to a solid phase catalyst, wherein the reactants and/or products are present in a gas- or liquid phase.

According to an embodiment of the invention, the contacting comprises a streamwise contacting of the first hydrocarbon-composition with the solid catalyst or wherein the contacting comprises a batchwise contacting of the first hydrocarbon-composition with the solid catalyst. Streamwise contacting may refer to a contacting of the catalyst by a flow (stream) of the first hydrocarbon composition flowing (streaming) across the catalyst. The catalyst may be stationary or move. Streamwise contacting may also refer to a continuous flow of a first hydrocarbon composition, which means that a flow of the first hydrocarbon composition (into a reactor with catalyst loading) is carried out continuously for a given amount of time. During said given amount of time the flow rate may be fixed or varied. Batchwise contacting may refer to a loading of a reactor with catalyst and the first hydrocarbon composition, then subsequently carrying out a reaction, and finally unloading of the reactor.

As mentioned above, the invention also relates to a metal organic framework (MOF) composition configured to be used as MOF catalyst in a method according to claim 1 or 2, the MOF composition comprising a MOF lattice and a catalytically active site hosted in the MOF lattice, wherein the MOF lattice comprises a number of nodes and a number of linkers interconnecting the nodes. Generally, metal organic frameworks define porous and crystalline materials, that gained significant scientific and economic interest in the current years. These materials offer practical implementations in different sectors, such as hydrogen and carbon dioxide storage, catalysis and separation due to their superior porosity, huge surface area and versatile framework.

Metal organic frameworks (MOFs) refer to one-, two- or three-dimensional porous networks, comprising metal ions or clusters coordinated to organic ligands. They may be referred to as a subclass of coordination polymers. The organic ligands may be referred to as linkers. The metal ions or clusters may be referred to as nodes. In the present context, the MOF lattice may be understood as MOF, preferably as three-dimensional porous MOF lattice. The MOF lattice has to be tailored in a way that said catalytically active site can be hosted in pores or cavities of the MOF lattice. The size of the pores or cavities may for example be varied by tailoring the linkers. The catalytically active site hosted in the MOF lattice forms - in combination with the MOF lattice - a MOF composition. The MOF composition may - besides the MOF lattice and the catalytically active site - comprise other components. The catalytically active site may be bound or coordinated to the MOF lattice. Binding the catalytically active site to the MOF lattice may be associated with one or more chemical bonds (including coordinative bonds) between the catalytically active site and the MOF lattice or may be associated with other chemical or physical interactions between the catalytically active site and the MOF lattice. Also, the catalytically active site may be trapped or physically enclosed within the MOF lattice. Alternatively, the catalytically active site may be part of one or more of the nodes or one or more of the linkers. In such a case one or more of the nodes or one or more of the linkers may directly form the catalytically active site. The MOF lattice has to be tailored in a way that hydrocarbons to be converted may reach the catalytically active sites. In particular, the pore-sizes or the size of cavities within the MOF have to be tailored in a way that at least parts of the hydrocarbon molecules to be converted may reach (contact) the catalytically active sites. The MOF lattice may comprise repeating units (building blocks), that form a self-assembling porous network. Besides hosting one or more catalytically active sites within the MOF lattice additional functional groups may be added to one or more of the nodes and/or to one or more of the linkers, the additional functional groups also take part of the catalytical process. Preferably the MOF composition comprises a well-defined pore structure (tailored for the present use-case), and allows diffusion of hydrocarbons of the first and second hydrocarbon composition (so the feed and the products).

According to a further embodiment of a MOF according to the present invention, the catalytically active site comprises a structure of formula (1): 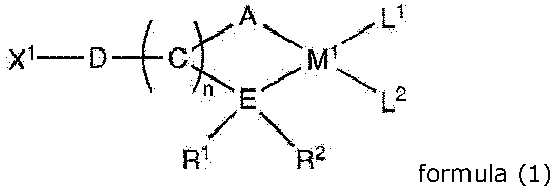 wherein in the structure of formula (1):
- M¹ is a transition metal;
- L¹ and/or L² are independently selected from: H, an alkyl group, an aryl group, an olefin, an organic group comprising a hetero-atom such as oxygen or nitrogen, CO, NO, NO₂, CO₂, a halogen atom, or wherein formula (1) does not comprise L¹ and/or L²;
- E is selected from P, N, As, O, S, Bi;
- R¹ is selected from H, P, an alkyl group, an aryl group, or wherein formula (1) does not comprise R¹;
- R² is selected from R¹;
- A is selected from O, N, S, a carboxylate group, an alcoholate group, a sulfide group, a sulfonate group, a phosphate group, an ester group, an amine group, an imine group, a pyridine group, ER¹R², or L¹;
- Cₙ relates to a carbon chain with a number of n carbon atoms, wherein n = 1 - 5;
- D is an aliphatic group or aryl group, wherein D is bound to one or more of the carbon atoms of Cₙ;
- X¹ is selected from a carboxylic acid group, sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, a boronic acid ester group, a triazole group, a triazolate group, a tetrazole group, a tetrazolate group or wherein formula (1) does not comprise X¹.

All mentioned groups may also refer to derivates of said groups, each comprising additional functional groups.

The term "aryl group" refers to an aromatic moiety. An "alkyl" group in the context of the present invention, for example and if not mentioned differently, refers to a linear or branched hydrocarbon which is saturated, it comprises only single bonds between adjacent carbon atoms. Preferably, an alkyl group according to the present invention may be selected from methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl, cyclohexyl, cyclopentyl, n-hexyl, 1,1-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-methyl-2-ethylpropyl.

An "alcoholate" group may refer to an alkoxy group, which may according to the invention be selected from methoxy, ethoxy, n-propoxy, isopropoxy, n-butoxy, sec-butoxy, tert-butoxy, n-pentoxy, 1-methylbutoxy, 2-methylbutoxy, 3-methylbutoxy, neopentoxy, 1-ethylpropoxy, cyclohexoxy, cyclopentoxy, n-hexoxy, 1,1-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-methyl-2-ethylpropoxy.

The term "olefin" refers to unsaturated hydrocarbons, comprising one or more double or triple bonds between adjacent carbon atoms. A "halogen" atom in the context of the invention, if not mentioned differently, refers to fluorine (F), chlorine (CI), bromine (Br), iodine (I), or astatine (At). In case that formula (1) does not comprise L¹ and/or L², this is independent from other structural parts of formula (1). So, if L¹ and/or L² are not present in formula (1), the latter may still comprise R¹, R², A, M¹, E, Cₙ, D and X¹. The same applies to R¹ and X¹.

According to a further embodiment of a MOF according to the present invention, the catalytically active site is bound or coordinated to the MOF lattice, wherein the catalytically active site is preferably bound or coordinated to the MOF lattice via X¹. In case that the catalytically active site is "bound" to the MOF lattice, a chemical bonding is provided between parts of the catalytically active site and the MOF, e. g. a single-bond, double-bond, triple-bond. In case that the catalytically active site is coordinated to the MOF lattice, the "coordination" refers to a coordinate covalent bond, which is synonymously known as dative bond, dipolar bond or coordinate bond. Such a bond may be formed in the case that in an electron pair bond, the bonding electrons originate from only one of the two bonding partners. A molecule or ion with a lack of electrons is called acceptor (= Lewis acid), the one with free electrons is called donor (= Lewis base). Alternatively, the catalytically active site may be bound or coordinated to the node.

Transition metals are to be understood as elements of groups 4 - 11 of the periodic table of elements. In current praxis also f-block elements (lanthanide and actinide) series) are considered as "transition metals", in particular as "inner transition metals". According to a further embodiment of a MOF according to the present invention, M¹ is selected from Ni, Pd, Pt, Co, Fe, Ru, Rh, Ir, Os, W wherein M¹ preferably is Ni. Nickel is of advantage due to its relatively low price when compared to other transition materials. Nickel is also of advantage in terms of the achievable catalytical activity (with respect to the mentioned conversion of the first hydrocarbon composition to the second hydrocarbon composition).

According to a further embodiment of a MOF according to the present invention, regarding L¹ and/or L²,
- the organic group comprising oxygen as hetero-atom is selected from THF, an alcohol group, an alcoholate group or an acetylacetonate group,
- the organic group comprising a nitrogen as hetero-atom is selected from an amine group, an imine group, an amide group or a nitrile group,
- the halogen atom is CI, Br, or I.

All the mentioned components selected from THF (tetrahydrofuran; 1,4-Epoxybutane), the alcohol group, the alcoholate (alkoxy) and acetylacetonate group may comprise one or more oxygen atoms, which may each act as binding/coordination partner with M¹. All the mentioned components selected from an amine group, an imine group, an amide group or a nitrile group may comprise one or more nitrogen atoms, which may each act as binding/coordination partner with M¹. According to a further embodiment of a MOF according to the present invention, A preferably is a carboxylate or an alcoholate. Said carboxylate or alcoholate representing A, may comprise one or more carboxylate- or alcoholate groups.

According to a further embodiment of a MOF according to the present invention, Cₙ is C₂. In this case an alkyl chain of two carbon atoms forms Cₙ. Also, higher numbers of n may be suitable, for instance n = 1, 2, 3, 4, 5, 6, 7, 8, 9, 10.

According to a further embodiment of a MOF according to the present invention, the nodes are independently defined by a structure of M²_{w}L³_{z}, wherein
- M² refers to one or more atoms of an element, wherein the element preferably is a metal, a semi-metal, an alkali metal, or an earth alkali metal,
- w = 1 - 24,
- L³ refers to a ligand binding or coordinating to M² via O, N, S, P, C, CI, Br, I,
- z = 0 - 24.

In the structure M²_{w}L³_{z} one or more ligands L³ of the same or different type (structure) may be present. For example, M²_{w}L³_{z} may be selected from: Zn₄(CO₂)₆; M₃O(CO₂)₆ with M = Zn, Cr, In or Ga; M₂(CO₂)₄ with M = Cu, Zn, Fe, Mo, Cr, Co, or Ru; Zr₆O₄(OH)₄-(CO₂)₁₂; Zr₆O₈(CO₂)₈; Zn₃(H₂O)₃(CO₂)₆; Zn₄O(CO₂)₈; Zn₇(OH)₂-(CO₂)₁₂;Co₂(OH)(CO₂)₅-(C₅H₅N)₃; Al(OH)(CO₂)₂: VO(CO₂)₂; Mn(CO₂)₂; M₃O₃(CO₂)₃ with M = Zn, Mg, Co, Ni, Mn, or Fe; Mn₃(CO₂)₈; Zn(C₃H₃N₂)₄; Ag₃(OH)(H₂O)₂(C₃H₃N₂)₆; Fe(C₂O₂)₂(H₂O)₂; Zn(C₂O₂)₃; In(C₅HO₄N₂)₄; Cu(CO₂)₂(C₄H₄N₂)-(C₆H₂O₄N₂); Ni(C₈H₂₀N₄)O₂; Cd₂Cl₆(C₅H₅N)₄; Mn₄Cl(CHN₄)₈; Cu₄Cl(C₂H₂N₃)₈; M(C₅H₅N)₄ with M = Cu or Cd; Zn(CO₂)₄(NH₂)₂; Na(OH)₂(SO₃)₃; La(PO₃)₄(PO₃H)(H₂O)₃; Cu₂(CNS)₄; CuS₃; Zn₃(CO₂)₆(C₅H₅N)₂; Ni₄(C₃H₃N₂)₈; Zr₆(µ₃-O)₄(µ₃-OH)₄(CO₂)₁₂; Zr₆(µ₃-O)₄(µ₃-OH)₄(CO₂)₁₀(AcO)₂; Zr₆(µ₃-OH)₈(OH)₄(CO₂)₈; Zr₆(µ₃-O)₄(µ₃-OH)₄(OH)₄(H₂O)₄(CO₂)₈; Zr₆(µ₃-O)₄(µ₃-OH)₄(OH)₆(H₂O)₆(CO₂)₆; Zr₆(µ₃-OH)₈(-OH)₈(CO₂)₈; [Zr₆(µ₃-O)₄(µ₃-OH)₄(OH)₄(H₂O)₄]⁸⁺.

Preferably all or some of the nodes of the MOF lattice have a structure M²_{w}L³_{z} as given above.

According to a further embodiment of a MOF according to the present invention, the linkers are independently defined by a structure of R³ₓX²_{y}, wherein
- R³ refers to a structure comprising a number of m = 2 - 50 C atoms, wherein the structure comprises one or more functional groups selected from an amino group, an imido group, an amido group, a cyano group, a nitro group, an aldehyde group, a urea group, a thiourea group, an ester group, a carbonate group, an alcohol group, an ether group, a halogen, a phosphine derivative, a phosphine oxide derivative, an imidazolium group, a pyridino group, a triazole group, an imidazole group, a phosphate group, a sulfonic acid group, a sulfonate group, an enolate group, an imine group, a phenantroline group or combinations thereof, or wherein the structure does not comprise any of said functional groups,
- X² is selected from a carboxylic acid group, a sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, an ester group, a triazole group, a triazolate group, a tetrazole group, a tetrazolate group,
- x = 1 - 8;
- y = 1 - 8.

Preferably all or some of the linkers of the MOF lattice have a structure R³ₓX²_{y} as given above.

According to an exemplary first selection, the linkers may be - according to an embodiment of the invention - selected from one of the following linkers:

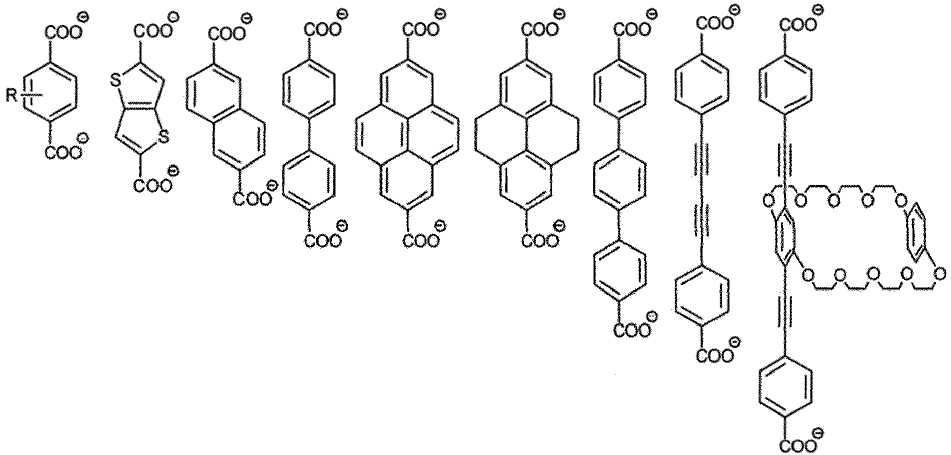

According to an exemplary second selection, the linkers may be - according to an embodiment of the invention - selected from one of the following linkers:

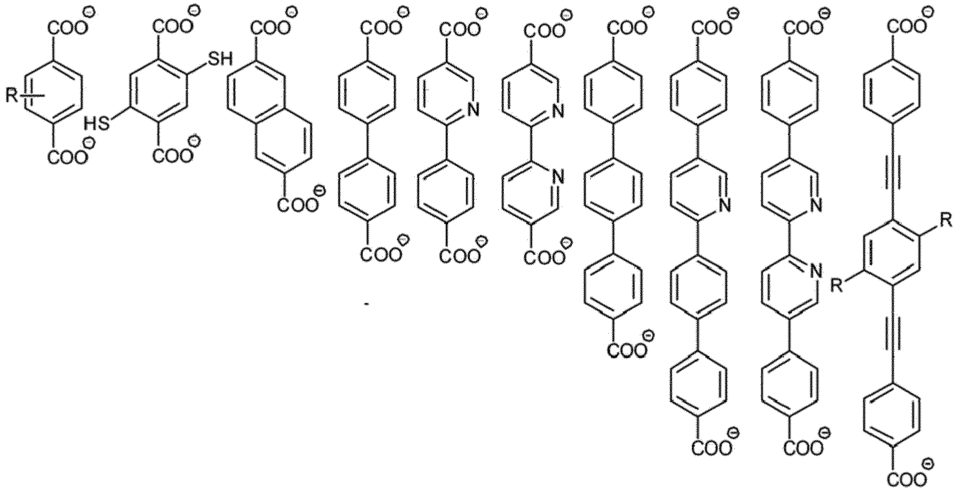

According to an exemplary further selection, the linkers may be - according to an embodiment of the invention - selected from one of the following linkers:

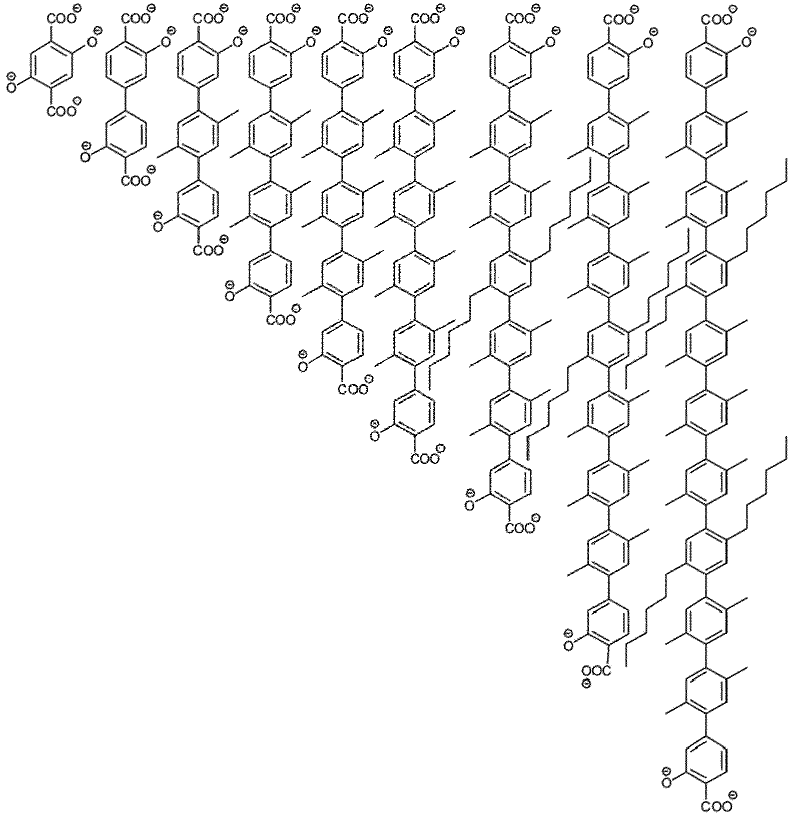

According to an exemplary further selection, the linkers may be - according to an embodiment of the invention - selected from one of the following linkers:

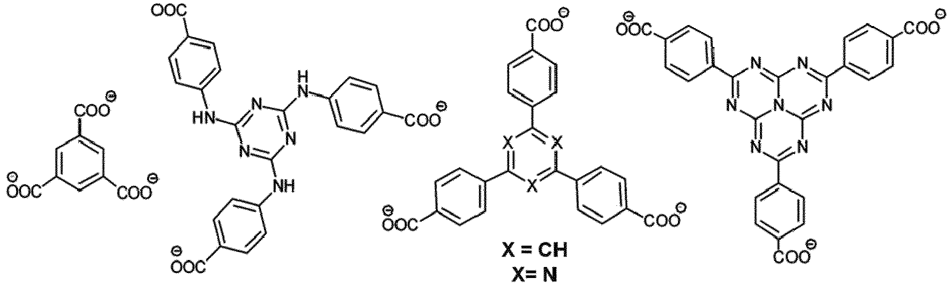

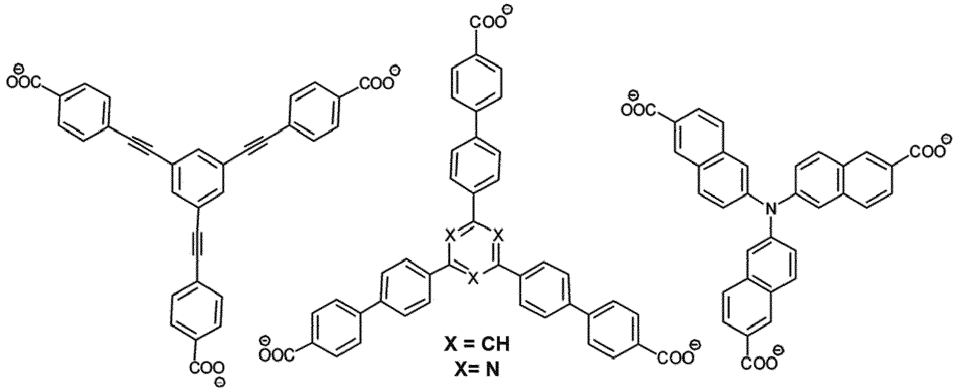

According to an exemplary further selection, the linkers may be - according to an embodiment of the invention - selected from one of the following linkers:

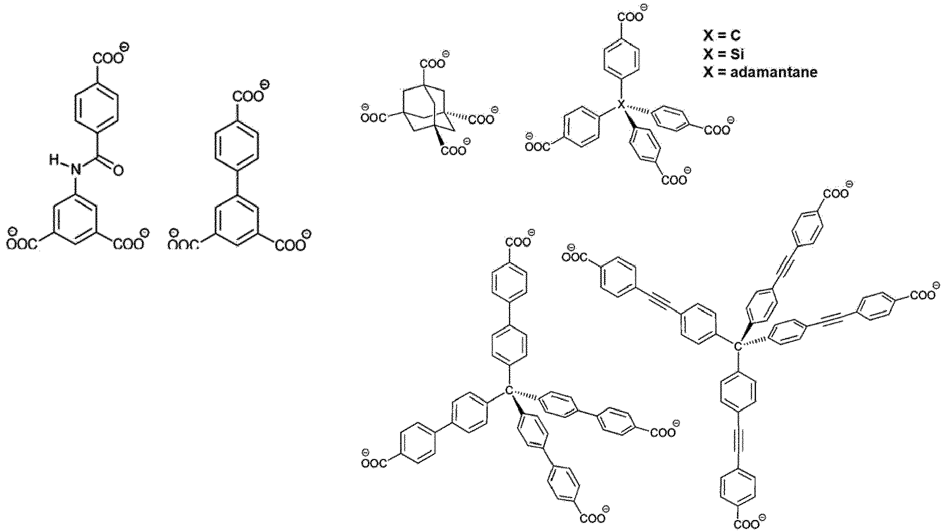

According to an exemplary further selection, the linkers may be - according to an embodiment of the invention - selected from one of the following linkers:

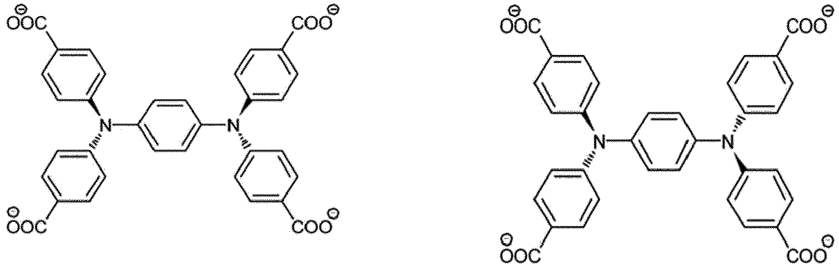

According to an exemplary further selection, the linkers may be - according to an embodiment of the invention - selected from one of the following linkers:

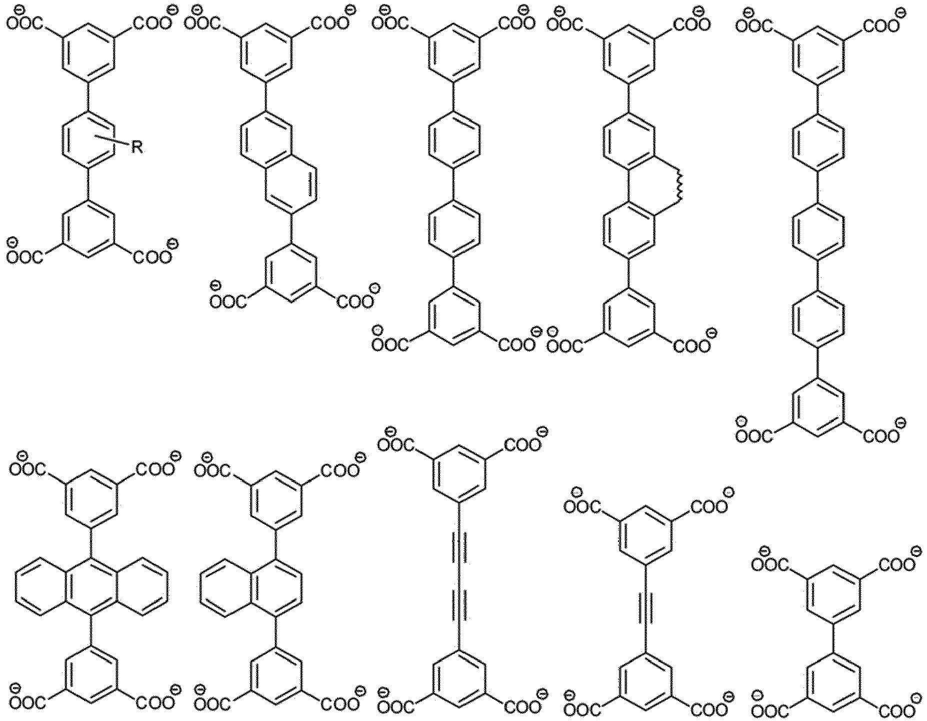

According to an exemplary further selection, the linkers may be - according to an embodiment of the invention - selected from one of the following linkers:

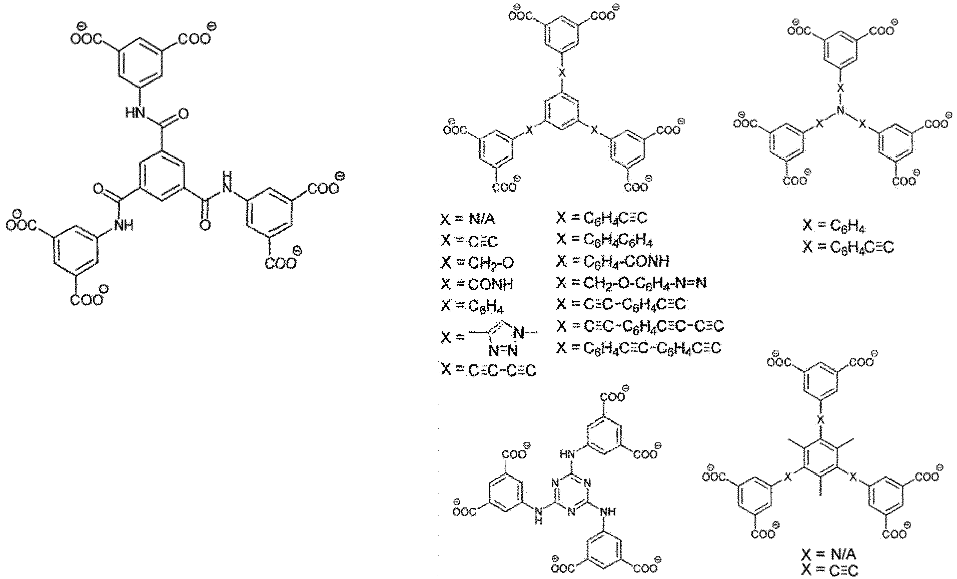

According to an exemplary further selection, the linkers may be - according to an embodiment of the invention - selected from one of the following linkers:

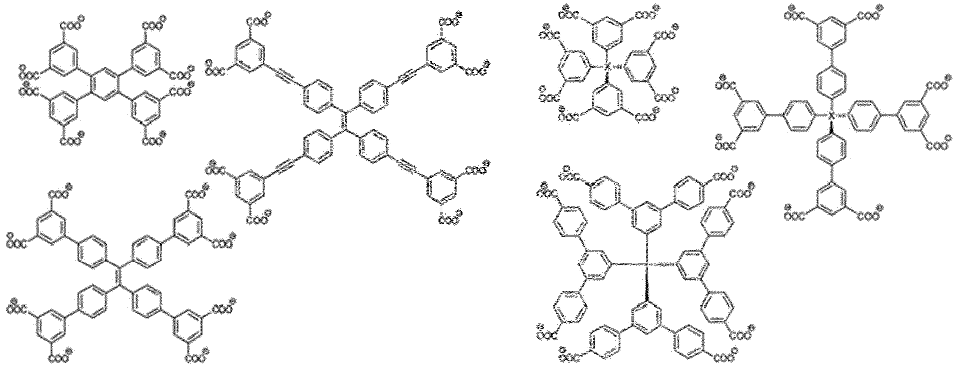

According to an exemplary further selection, the linkers may be - according to an embodiment of the invention - selected from one of the following linkers:

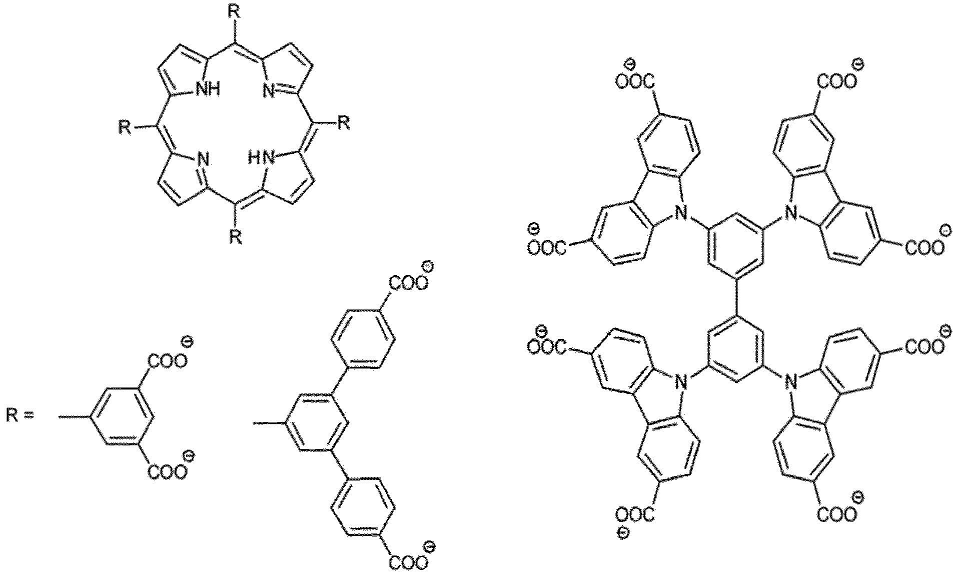

According to an exemplary further selection, the linkers may be - according to an embodiment of the invention - selected from one of the following linkers:

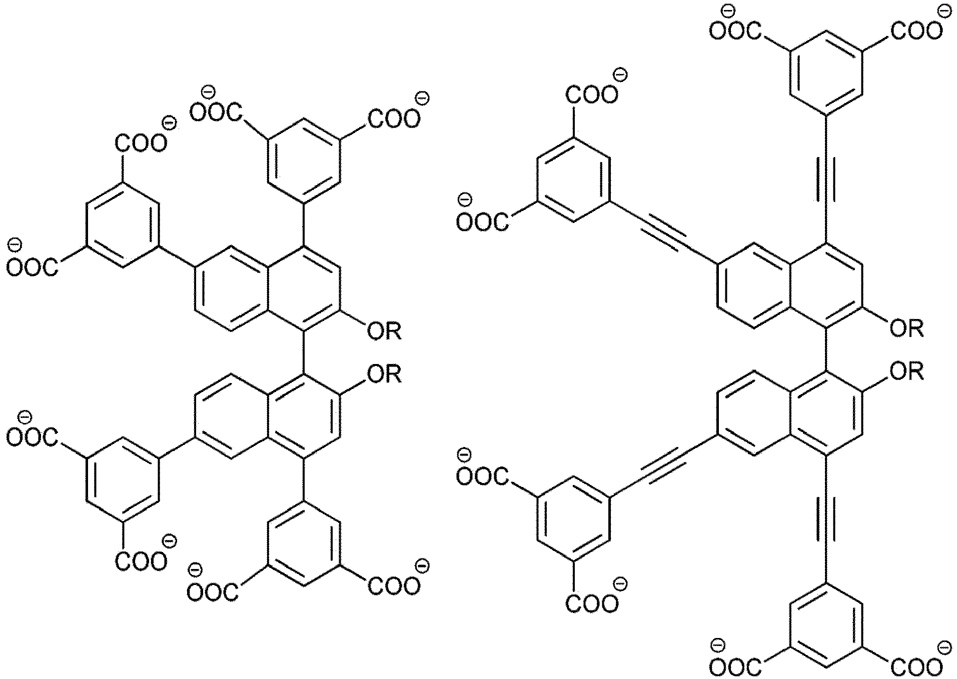

According to an exemplary further selection, the linkers may be - according to an embodiment of the invention - selected from one of the following linkers:

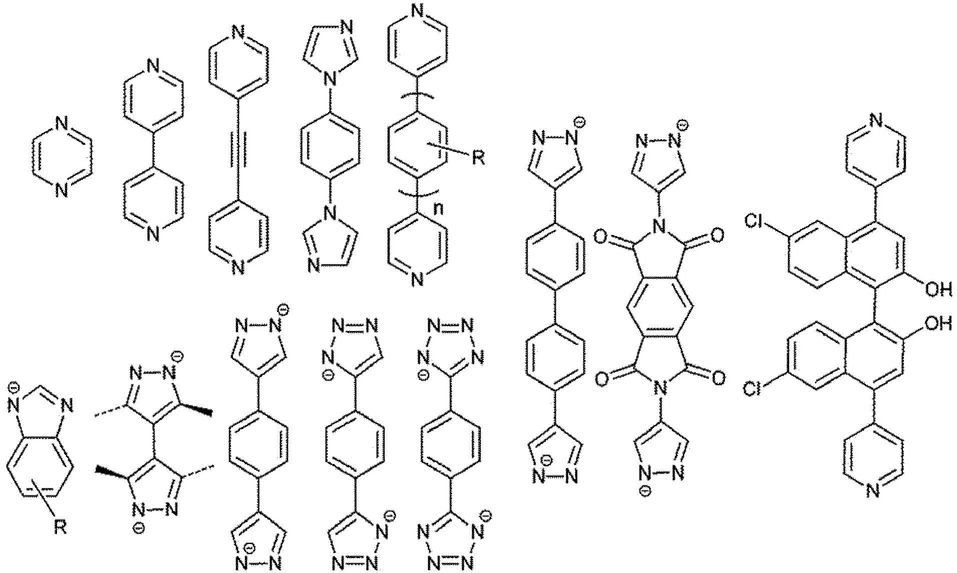

According to an exemplary further selection, the linkers may be - according to an embodiment of the invention - selected from one of the following linkers:

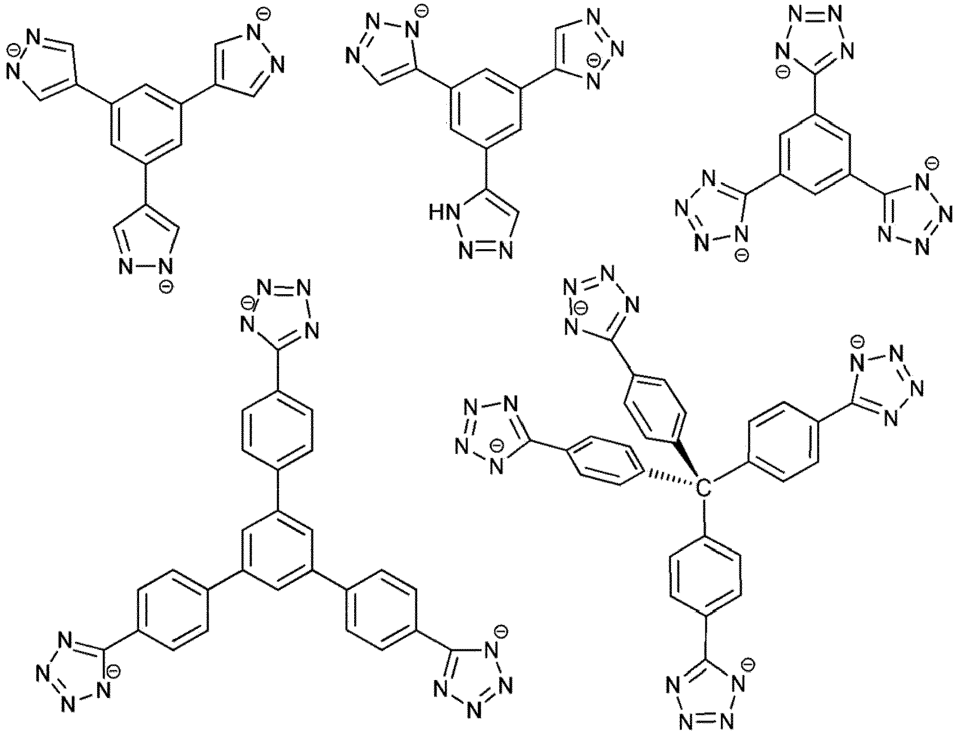

According to an exemplary further selection, the linkers may be - according to an embodiment of the invention - selected from one of the following linkers:

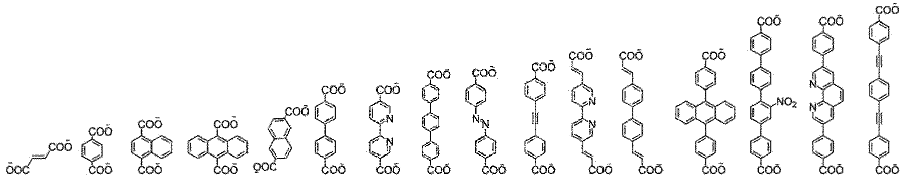

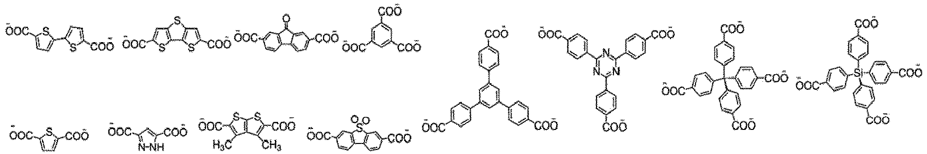

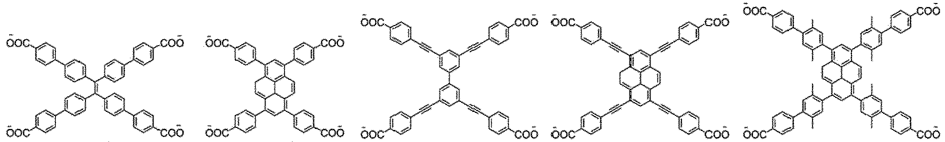

According to an exemplary further selection, the linkers may be - according to an embodiment of the invention - selected from one of the following linkers:

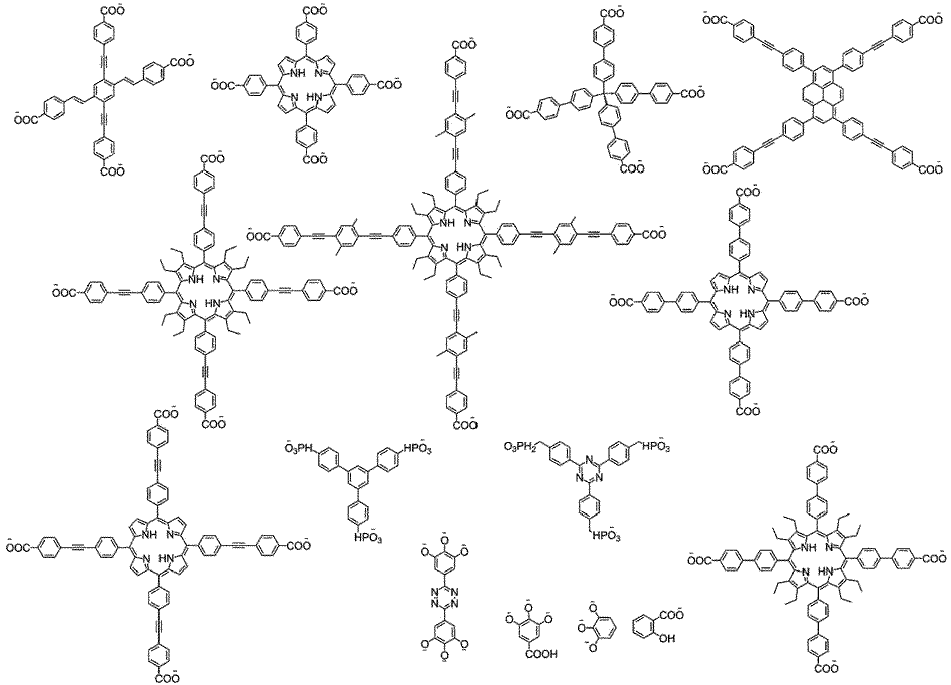

According to a further embodiment of a MOF according to the present invention, the number of nodes and the number of linkers define a three-dimensional porous network, wherein each linker independently interconnects two or more nodes. By varying the structure of the linkers and/or the nodes, the porosity, pore-sizes and structure of the MOF lattice - and thus also the take-up capabilities for catalytically active sites and/or reaction educts/products - may be tailored.

In a preferred embodiment, the MOF lattice according the invention is provided by a NU-1000 metal organic framework. The NU-1000 MOF comprises 1,3,6,8-Tetra (4-carboxylphenyl) pyrene as linkers and [Zr₆(µ₃-O)₄(µ₃-OH)₄(OH)₄(H₂O)₄]⁸⁺ as nodes. The catalytically active site may bind or coordinate to the linker (e.g. to the pyrene fragment or carboxyl groups of the linker. Alternatively, the catalytically active site may bind or coordinate to the Zr metal or any fragment of the [Zr₆(µ₃-O)₄(µ₃-OH)₄(OH)₄(H₂O)₄]⁸⁺ node.

As mentioned above, the invention also relates to method of preparing a MOF composition according to the invention, wherein the MOF composition is configured to be used as MOF catalyst in a method according to the invention, wherein preparing the MOF composition comprises the steps of:
a) Providing a MOF lattice
b) Introducing a catalytically active site into the MOF lattice.

According to an embodiment of a method of preparing a MOF composition according to the present invention, step a) comprises interconnecting a number of nodes with a number of linkers to form the MOF lattice. Interconnecting the nodes and the linkers is preferably carried-out via chemical reaction(s). The interconnection between nodes and linkers may be carried out by way of a self-assembly reaction or by providing parts of the desired MOF lattice and connecting these parts at desired positions. Also, a full synthesis comprising a number of steps to form the MOF lattice may be understood as "providing" the MOF lattice. It should be noted that according to the invention, "providing the MOF lattice" may also be understood as "purchasing a commercially available MOF lattice from a manufacturer" or as "placing a component comprising the MOF lattice inside a reactor or reaction flask". Providing a MOF lattice may also be understood in a sense of dissolving/suspending the MOF lattice in a suitable solvent.

Introducing a catalytically active site into the MOF lattice may be understood as trapping one or more catalytically active sites in pores and/or cavities of the MOF lattice. Introducing a catalytically active site into the MOF lattice may also be understood as binding and/or coordinating one or more catalytically active sites to nodes and/or linkers of the MOF lattice. It may be the case, that a catalytically active site may both bind and coordinate to a node and/or linker of the MOF lattice via different components (atoms, functional groups) of the catalytically active site. The catalytically active site may be introduced into the MOF lattice in a one- or more (e. g. two) step procedure, for example via first introducing a precursor into the MOF lattice (the precursor may bind or coordinate to one or more of the nodes/linkers of the MOF lattice) and second introducing an additional catalytically active compound, which binds/coordinates or otherwise interacts with the precursor.

According to a further embodiment of a method of preparing a MOF composition according to the present invention, step b) is carried out by an impregnation technique, preferably via an incipient wetness technique. Incipient wetness techniques, also called capillary impregnation or dry impregnation, is a commonly used technique for the synthesis of heterogeneous catalysts. Typically, the active metal precursor (of the catalytically active site) is dissolved in an aqueous solution or an organic solvent. Then the metal-containing solution is added to a catalyst support (e. g. the MOF lattice), which preferably contains the same pore volume as the volume of the solution that was added. Capillary action draws the solution into the pores. Solution added in excess to the support pore volume causes the solution transport to change from a capillary action process to a diffusion process, which is much slower. The formed MOF catalyst can then be dried and calcined to drive off the volatile components within the solution, depositing the metal on the catalyst surface. The maximum loading is limited by the solubility of the precursor in the solution. The concentration profile of the impregnated compound depends on the mass transfer conditions within the pores during impregnation and drying.

Embodiments, features and advantages of the method according to the invention, correspond to embodiments, features and advantages of the MOF composition and/or the method of preparing a MOF composition according to the invention and vice versa.

### Brief description of the Figures

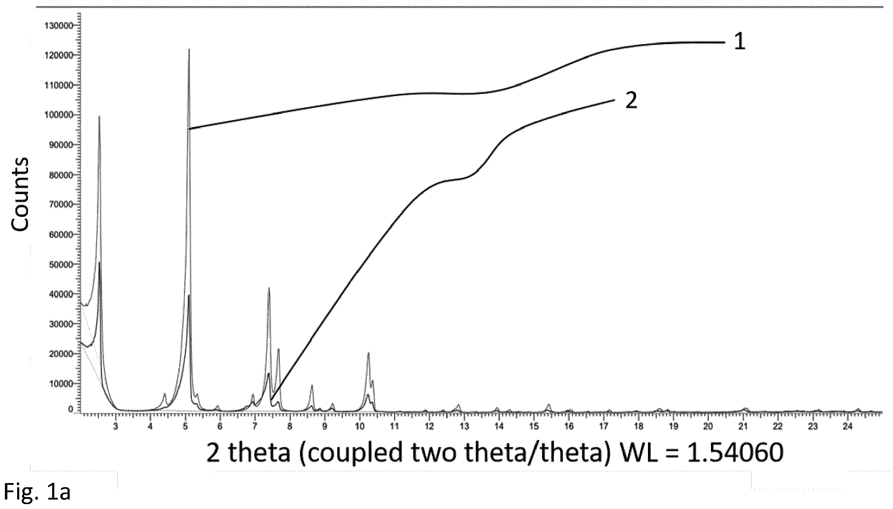

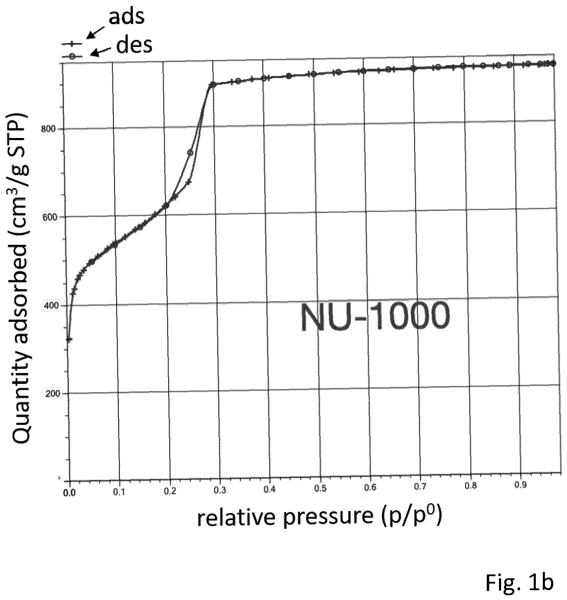

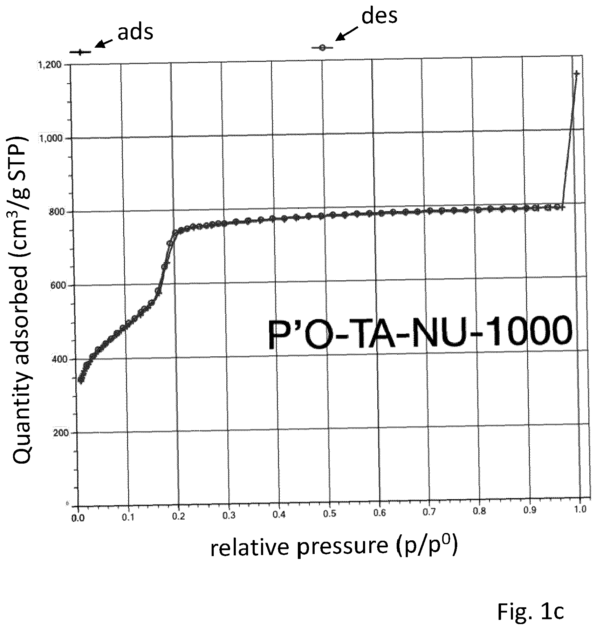

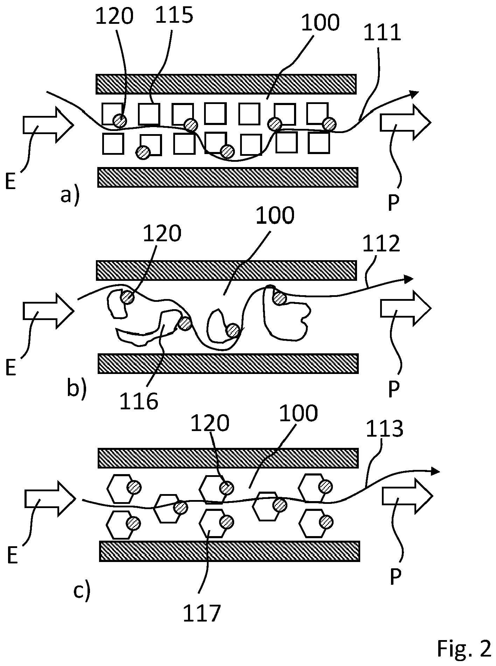

Further details, features, aims and advantages of the present invention are shown in the following, with reference to figures 1 and 2. The figures show
- Figure 1: a) PXRD of NU-1000 (curve 1) and of P'O-TA-NU-1000 (curve 2); b) Nitrogen physisorption isotherm for NU-1000, wherein both the adsorption curve (ads) and desorption curve (des) are illustrated c) Nitrogen physisorption isotherm for P'O-TA-NU-1000, wherein both the adsorption curve (ads) and desorption curve (des) are illustrated;
- Figure 2a-c: schematic representations regarding a flow of hydrocarbons through a channel comprising a) a Ni zeolite catalyst, b) a Ni amorphous silica alumina catalyst and c) a Ni MOF that may be used as MOF catalyst according to the invention.

Wherein the results given in Figure 1 a) - c) are self-explaining, it is now referred to Figures 2 a) - c), illustrating a schematic flow of hydrocarbons through a channel 100 (representing a reactor) comprising a) a Ni zeolite catalyst, b) a Ni amorphous silica alumina catalyst and c) a Ni MOF that may be used as MOF catalyst according to the invention. An educt feed stream E of a first hydrocarbon composition enters the respective channel 100, the hydrocarbons flow along diffusion paths 111, 112, 113 and exit the channel 100 as a product stream P. The Ni zeolite catalyst illustrated in Fig. 2a provides a well-defined pore structure, see the building blocks 115 of the catalyst. The building blocks comprise catalytically active Ni centers 120. The relatively small pore size (e. g. 12 Angstrom) restricts the length of the hydrocarbon conversion. The diffusion of molecules flowing through the channel 100 is restricted by the structure (building blocks 115) of the catalyst, which may also cause trapping of longer molecules. The Ni amorphous silica alumina catalyst illustrated in Fig. 2b provides an ill-defined pore-structure (caused by building blocks 116) with a large range of pore sizes (e.g. 15 - 100 Angstrom). Such catalysts generally do not provide sufficient yield in the preferred range of hydrocarbons with a carbon count of 9 - 18, preferably 10 - 16 carbon atoms. Ni MOFs (which may be a MOF catalyst according to the invention) provide a well-defined pore structure with pore sizes of e. g. 30 Angstrom. Molecules may easily penetrate (diffuse) through the building blocks 117 of the catalyst. Such a catalyst has shown to be efficient for forming hydrocarbons with a carbon count of 9 - 18, preferably 10 - 16 carbon atoms.

### Experiments

The following examples are used to describe the invention. Based on the examples, the person skilled in the art can easily conclude that and how to vary certain parameters or structures as given in the above description.

### Synthesis of functional MOFs

### Example 1 (P'O-TA-NU-1000)

A 0.1 M solution of 2-(diphenylphopshino)terephthalic acid in DMF (6.2 mL) was added to solid NU-1000 (502 mg) three-necked, round-bottomed flask under inert atmosphere. The suspension was stirred at 60 °C overnight. The solid was filtered off and washed with DMF and methanol and afterwards dried in high vacuum at 60 °C overnight to give P'O-TA-NU-1000.

### Example 2 (P-NU-1000)

A 0.1 M solution of 4-(diphenylphosphino)benzoic acid in MeCN (6.9 mL) was added to solid NU-1000 (503 mg) three-necked, round-bottomed flask under inert atmosphere. The suspension was stirred at 60 °C overnight. The solid was filtered off and washed with MeCN and methanol and afterwards dried in high vacuum at 60 °C overnight to give P-NU-1000.

### Example 3 (PS-NU-1000)

A 0.1 M solution of sodium diphenylphosphinobenzene-3-sulfonate in H₂O (6.9 mL) was added to solid NU-1000 (503 mg) three-necked, round-bottomed flask under inert atmosphere. The suspension was stirred at 60 °C overnight. The solid was filtered off and washed with H₂O and methanol and afterwards dried in high vacuum at 60 °C overnight to give PS-NU-1000.

### Synthesis of Nickel functional MOFs

### Example of Ni Catalyst preparation from functional MOF (P'O-TA)-NU-1000

P'O-TA-NU-1000 (120.3 mg) was activated by heating at 120 °C under vacuum for 4 h. A 0.1 M Ni solution was prepared dissolving Ni(acac)₂(133.9 mg) in toluene (5 mL) yielding a green solution. The Ni solution (0.5 mL) was added through incipient wetness impregnation to P'O-TA-NU-1000. The solid was dried in vacuum at room temperature to give Ni@(P'O-TA)-NU-1000.

### Example of Ni Catalyst preparation from nickel complex and non-functional MOF (Ni(PO)@ NU-1000)

NU-1000 (120.3 mg) was activated by heating at 120 °C under vacuum for 4 h. A 0.1 M Ni solution was prepared dissolving 2-(diphenylphosphino)benzoic acid (307 mg) and Ni(acac)₂ (269 mg) in toluene (10 mL) yielding a green solution. The Ni solution (0.5 mL) was added through incipient wetness impregnation to P'O-TA-NU-1000. The solid was dried in vacuum at room temperature to give Ni(PO)@ NU-1000.

### Catalysis

Ni@(P'O-TA)-NU-1000 (76 mg) was placed in a 60 mL high pressure autoclave and flushed with Ar and then shortly with ethylene gas. The reactor was then pressurized with 10 bar ethylene at room temperature for 1 h. A 0.5 M solution of NaBH₄ solution in anhydrous MeCN (0.5 mL) was added via syringe thereto. The reactor was closed, shortly flushed with ethylene gas, pressurized to 40 bar ethylene, and then heated to 80 °C for 2.5 h. The reactor was cooled down to room temperature and the pressure released. Toluene (1.3 mL) was added and the solution was transferred into a vial and analyzed by GC-FID.

### Characterization

Powder X-ray diffraction (PXRD) measurements were conducted on a Bruker D8 Advance diffractometer working in Bragg-Brentano geometry, with Cu Kα1 radiation wavelength of 1.541 Å. Diffraction was measured in the 2θ range between 2° and 25°.

Nitrogen sorption measurements were conducted on a Micromeritics 3Flex Physisorption instrument at 77 K, after activating at 120 °C under vacuum for 16-20 hours. The specific surface area was determined according to the Brunauer-Emmett-Teller (BET) method by fitting the isotherms in the 0.01 to 0.1 p/po range to meet the consistency criteria.

UPLC-MS experiments were performed on a Waters Acquity UPLC H-Class system equipped with a Waters BEH C18 (1.7 µm) column, Acquity PDA UV/VIS and Acquity QDa ESI-MS detectors.

All MOFs were characterized by Powder X-ray diffraction and nitrogen physisorption. Figure 1a shows the PXRD and Figures 1b, 1c the nitrogen adsorption isotherms, respectively, of NU-1000 and of P'O-TA-NU-1000. The functional MOFs and Nickel functional MOFs were characterized and the function and nickel quantified by UPLC- UV and UPLC-MS after digestion of the MOF under basic conditions.

## Claims

1. A method for converting a first hydrocarbon composition to a second hydrocarbon composition, the method comprising contacting the first hydrocarbon composition with a solid catalyst yielding the second hydrocarbon composition,
- wherein the first hydrocarbon composition comprises one or more unsaturated hydrocarbon(s), each independently having a number C_{E} of carbon atoms, wherein E = 2 - 8;
- wherein the second hydrocarbon composition comprises one or more unsaturated hydrocarbon(s), each independently having a number C_{P} of carbon atoms, wherein P = 9 - 18, preferably P = 10 - 16;
- and wherein the solid catalyst is a metal organic framework (MOF) catalyst.

2. Method according to claim 1, wherein the contacting comprises a streamwise contacting of the first hydrocarbon composition with the solid catalyst or wherein the contacting comprises a batchwise contacting of the first hydrocarbon composition with the solid catalyst.

3. A metal organic framework (MOF) composition configured to be used as MOF catalyst in a method according to claim 1 or 2, the MOF composition comprising a MOF lattice and a catalytically active site hosted in the MOF lattice, wherein the MOF lattice comprises a number of nodes and a number of linkers interconnecting the nodes.

4. MOF composition according to claim 3, wherein the catalytically active site comprises a structure of formula (1): 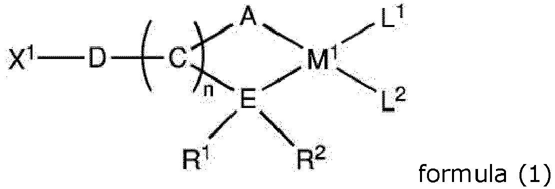 wherein in the structure of formula (1):
- M¹ is a transition metal;
- L¹ and/or L² are independently selected from: H, an alkyl group, an aryl group, an olefin, an organic group comprising a hetero-atom such as oxygen or nitrogen, CO, NO, NO₂, CO₂, a halogen atom, or wherein formula (1) does not comprise L¹ and/or L²;
- E is selected from P, N, As, O, S, Bi;
- R¹ is selected from H, P, an alkyl group, an aryl group, or wherein formula (1) does not comprise R¹;
- R² is selected from R¹;
- A is selected from O, N, S, a carboxylate group, an alcoholate group, a sulfide group, a sulfonate group, a phosphate group, an ester group, an amine group, an imine group, a pyridine group, ER¹R², or L¹;
- Cₙ relates to a carbon chain with a number of n carbon atoms, wherein n = 1 - 5;
- D is an aliphatic group or aryl group, wherein D is bound to one or more of the carbon atoms of Cₙ;
- X¹ is selected from a carboxylic acid group, sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, a boronic acid ester group, a triazole group, a triazolate group, a tetrazole group, a tetrazolate group or wherein formula (1) does not comprise X¹.

5. MOF composition according to claim 4, wherein the catalytically active site is bound or coordinated to the MOF lattice, wherein the catalytically active site is preferably bound or coordinated to the MOF lattice via X¹.

6. MOF composition according to claim 4, wherein M¹ is selected from Ni, Pd, Pt, Co, Fe, Ru, Rh, Ir, Os, W wherein M¹ preferably is Ni.

7. MOF composition according to claim 4, wherein regarding L¹ and/or L²,
- the organic group comprising oxygen as hetero-atom is selected from THF, an alcohol group, an alcoholate group or an acetylacetonate group,
- the organic group comprising a nitrogen as hetero-atom is selected from an amine group, an imine group, an amide group or a nitrile group,
- the halogen atom is CI, Br, or I.

8. MOF composition according to claim 4, wherein A preferably is a carboxylate or an alcoholate.

9. MOF composition according to claim 4, wherein Cₙ is C₂.

10. MOF composition according to claim 3, wherein the nodes are independently defined by a structure of M²_{w}L³_{z}, wherein
- M² refers to one or more atoms of an element, wherein the element preferably is a metal, a semi-metal, an alkali metal, or an earth alkali metal,
- w = 1 - 24,
- L³ refers to a ligand binding or coordinating to M² via O, N, S, P, C, CI, Br, I,
- z = 0 - 24.

11. MOF composition according to claim 3, wherein the linkers are independently defined by a structure of R³ₓX²_{y}, wherein
- R³ refers to a structure comprising a number of m = 2 - 50 C atoms, wherein the structure comprises one or more functional groups selected from an amino group, an imido group, an amido group, a cyano group, a nitro group, an aldehyde group, an urea group, a thiourea group, an ester group, a carbonate group, an alcohol group, an ether group, a halogen, a phosphine derivative, a phosphine oxide derivative, an imidazolium group, a pyridino group, a triazole group, an imidazole group, a phosphate group, a sulfonic acid group, a sulfonate group, an enolate group, an imine group, a phenantroline group or combinations thereof, or wherein the structure does not comprise any of said functional groups,
- X² is selected from a carboxylic acid group, a sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, an ester group, a triazole group, a triazolate group, a tetrazole group, a tetrazolate group,
- x = 1 - 8;
- y = 1 - 8.

12. MOF composition according to one of claims 3 - 11, wherein the number of nodes and the number of linkers define a three-dimensional porous network, wherein each linker independently interconnects two or more nodes.

13. Method of preparing a MOF composition according to one of claims 3 - 12, wherein the MOF composition is configured to be used as MOF catalyst in a method according to claim 1 or 2, wherein preparing the MOF composition comprises the steps of:
c) Providing a MOF lattice
d) Introducing a catalytically active site into the MOF lattice.

14. Method according to claim 13, wherein step a) comprises interconnecting a number of nodes with a number of linkers to form the MOF lattice;

15. Method according to claim 13, wherein step b) is carried out by an impregnation technique, preferably via an incipient wetness technique.
